Europäisches Patentamt

European Patent Office

Office européen des brevets

(11) Publication number: **0 328 422**
**A2**

## (12) EUROPEAN PATENT APPLICATION

(21) Application number: **89301350.8**

(22) Date of filing: **13.02.89**

(51) Int. Cl.⁴: **G 06 F 9/38**

(30) Priority: **12.02.88 JP 30345/88**

(43) Date of publication of application:
**16.08.89 Bulletin 89/33**

(84) Designated Contracting States: **DE FR GB**

(71) Applicant: **NEC CORPORATION**
**33-1, Shiba 5-chome, Minato-ku**
**Tokyo 108 (JP)**

(72) Inventor: **Takeuchi, Kazuhiro**
**c/o NEC Corporation 33-1, Shiba 5-chome**
**Minato-ku Tokyo (JP)**

**Sakuma, Hajime**
**c/o NEC Corporation 33-1, Shiba 5-chome**
**Minato-ku Tokyo (JP)**

**Nishiguchi, Yukihiro**
**c/o NEC Corporation 33-1, Shiba 5-chome**
**Minato-ku Tokyo (JP)**

(74) Representative: **Pritchard, Colin Hubert et al**
**Mathys & Squire 10 Fleet Street**
**London EC4Y 1AY (GB)**

(54) Microcomputer system.

(57) A microcomputer system comprises a microcomputer assembled on a first substrate, and a peripheral device assembled on a second substrate which is discrete from the first substrate. The microcomputer and the peripheral device are coupled to each other through a bus. The peripheral device includes a memory for storing a program to be executed by the microcomputer, an input/output port for performing an input and output of data between the microcomputer system and a device external to the microcomputer system, and a control circuit for controlling a transfer of the data and the program between the microcomputer and the peripheral device. The control circuit includes an address latch for indicating an address for the memory, an incrementer for updating a content of the address latch, and a bus interface for transferring the program and the data between the microcomputer and the peripheral device. The microcomputer operates to output an address for the input/output port so that the data can be transferred between the microcomputer and the input/output through the bus interface. The microcomputer operates to output an update control signal to the incrementer so as to cause the content of the address latch to be updated without supplying an address for the memory so that the program can continuously be transferred from the memory to the microcomputer through the bus.

FIGURE 1

**Description**

## MICROCOMPUTER SYSTEM

Background of the Invention

Field of the invention

The present invention relates to a microcomputer, and more specifically to a microcomputer system capable of reading instruction codes at a high speed.

Description of related art

At present, systems using microcomputers have provided a high function and a high performance, and therefore, demands to the microcomputers in function and in performance are increasing. In compliance with the demands, the microcomputers has realized a high function by providing peripheral devices such as a serial interface, timer/counter, general ports on the same semiconductor substrate, in addition to the arithmetic operation functions inherent to the computer. On the other hand, a high performance has been provided by operating the microcomputer at a high frequency as a result of improvements of circuit constructions and manufacturing processes.

As mentioned above, if the microcomputer system becomes complicated, it is become necessary to incorporate various functions on the same semiconductor substrate. Particularly, the larger the number of the general ports for controlling the peripheral devices is, it becomes more convenient to designing the system. However, the circuits that can be assembled in the same substrate is limited as matter of course. In the prior art, therefore, a device exclusively used for expanding the port has been coupled to external devices. In this case, input/output made by the microcomputer to the port expanding device has been executed at the same cycle as that of input/output made by the microcomputer to a memory.

However, the internal processing of the microcomputer such as arithmetic operation and data transfer between internal registers can be performed at a high speed. On the other hand, fetching of instruction codes and reading of data from an external memory must be executed through an address/data bus which couples between the microcomputer and the external memory. Therefore, such operation has, without exception, needed a processing time which is considerably longer than that for the internal processing of the microcomputer. The difference between the internal processing time of the microcomputer and the external memory access time is inclined to increase with the years. As a result, the overall performance of the microcomputer system will be limited by the memory access time.

Summary of the Invention

Accordingly, it is an object of the present invention to provide a microcomputer system which has overcome the above mentioned defect of the conventional one.

Another object of the present invention is to provide a microcomputer system capable of decreasing the total time used for memory access, so as to increase the processing speed of the overall microcomputer system.

A further object of the present invention is to provide a microcomputer system capable of fetching instruction codes having continuous addresses at a high speed, namely, for a short time of period.

The above and other objects of the present invention are achieved in accordance with the present invention by a microcomputer system comprising first processing means assembled on a first substrate and including at least instruction execution means, and second processing means assembled on a second substrate which is discrete from the first substrate, the first and second processing means being coupled to each other through a bus, the second processing means including memory means for storing a program to be executed by the instruction execution means, input/output means for performing an input and output of data between the microcomputer system and a device external to the microcomputer system, and control means for controlling a transfer of the data and the program between the first and second processing means, the control means including means for indicating an address for the memory means, means for updating a content of the address indicating means, and means for transferring the program and the data between the first and second processing means, the instruction execution means operating to output an address for the input/output means so that the data can be transferred between the first processing means and the input/output means through the transfer means, the instruction execution means operating to output an update control signal to the updating means so as to cause the content of the indicating means to be updated without supplying an address for the memory means so that the program can continuously be transferred from the memory means to the first processing means through the transfer means.

According to another aspect of the present invention, there is provided a data processing circuit which can be coupled through a bus to a microcomputer assembled on a substrate discrete from a substrate of the data processing circuit, comprising memory means for storing a program to be executed by the microcomputer, input/output means for performing an input and output of data between the microcomputer system and a device external to the microcomputer system, and control means for controlling a transfer of the data and the program between the microcomputer and the data processing circuit, the control means including means for indicating an address for the memory means, means for updating a content of the address indicating means, and means for transferring the program and the data between the microcomputer and the data processing circuit, so that when an instruction code should be continuously read from the memory means, the updating means is caused to update the content of the indicating means without being supplied with an address for the memory means so that the program can continuously be transferred from the memory means.

The above and other objects, features and advantages of the present invention will be apparent from the following description of preferred embodiments of the invention with reference to the accompanying drawings.

Brief Description of the Drawings

Figure 1 is a block diagram of an embodiment of the microcomputer system in accordance with the present invention;

Figure 2 illustrates a format of the PROM and the memory space used in the microcomputer system shown in Figure 1;

Figure 3A illustrates a reading cycle for an instruction code after branching in the microcomputer system shown in Figure 1;

Figure 3B illustrates a continuous reading cycle for instruction codes in the microcomputer system shown in Figure 1;

Figure 4A illustrates a reading cycle for data in the microcomputer system shown in Figure 1;

Figure 4B illustrates a writing cycle for data in the microcomputer system shown in Figure 1;

Figure 5 illustrates a cycle for outputting data to the port in the microcomputer system shown in Figure 1;

Figure 6A is a block diagram of another embodiment of the microcomputer system in accordance with the present invention;

Figure 6B illustrates the memory space in the microcomputer shown in Figure 6A;

Figure 7A illustrates a cycle for reading data from an external memory in the microcomputer system shown in Figure 6A; and

Figure 7B illustrates a cycle for writing data to the external memory in the microcomputer system shown in Figure 6A.

Description of the Preferred embodiments

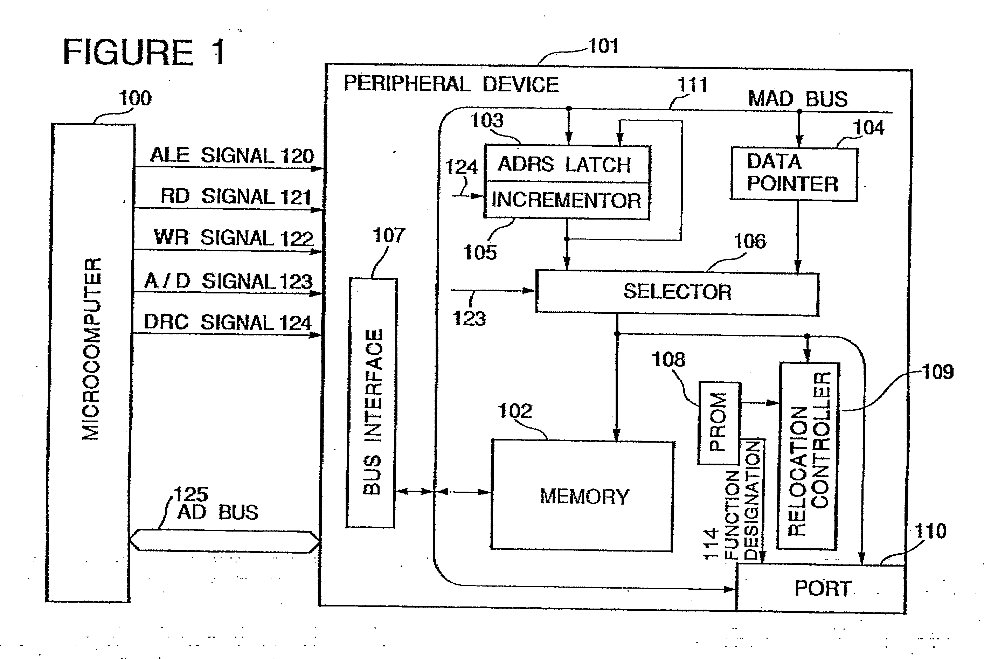

Referring to Figure 1, there is shown a diagram of an embodiment of the microcomputer system in accordance with the present invention. The shown microcomputer system includes a microprocessor chip 100 for performing a data input/output processing and an arithmetic and logic operation, and for controlling the whole of the microcomputer system, and a peripheral device 101. The microcomputer 100 and the peripheral device 101 are coupled to each other through an address/data bus 125 (called "AD bus" hereinafter), by which an address and data are exchanged between the microcomputer 100 and the peripheral device 101.

The microcomputer 100 generates an address latch enable signal (called "ALE signal" hereinafter) 120 for indicating a timing at which an address is outputted onto the AD bus 125, namely, a timing at which the peripheral device can latch the address on the AD bus 125, a read signal (called "RD signal" hereinafter) 121 for providing a timing of reading a program or data, and a writing signal (called "WR signal" hereinafter) 122 for providing a data writing timing. The microcomputer 100 also generates an address source signal (called "A/D signal" hereinafter) 123 for indicating which a given address is, a program address or a data address, and a data read controlling signal (called "DRC signal" hereinafter) for defining a timing at which a content of an address latch mentioned hereinafter is updated.

On the other hand, the peripheral device 101 includes a memory 102 for storing programs and data, an address latch 103 for latching the address for the program when the ALE signal 120 is active, a data pointer 104 for latching the address for the data when the ALE signal 120 is active, an incrementer 124 for updating a content of the address latch 103 in synchronism with a rising edge of the DRC signal 124, a selector 106 coupled to receive an output of the address latch 103 and an output of the data pointer 104 and for selecting one of the received outputs in accordance with the A/D signal 123. The peripheral device 101 also includes a bus interface 107 for controlling an interface between the microcomputer 100 and the peripheral device 101, a general input/output port 110, a PROM (programmable read only memory) 108 for storing information about where a base address for each of the input/output port 110 and the memory 102 is located in an address space, and also for storing information designating a function of the port 110, and a relocation controller 109 operating on the basis of the information stored in the PROM 108 for managing the address for the memory 102 and the port 110. The above mentioned elements included in the peripheral device 101 are coupled to a memory address/data bus (MAD) 111.

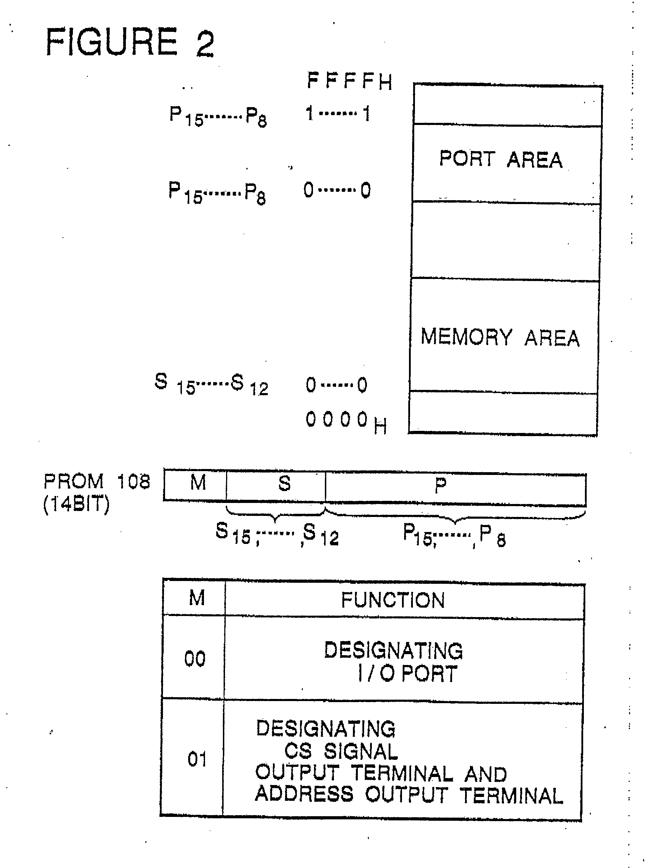

Now, explanation will be made on an address location of the memory 102 and the port 110 in the above mentioned microcomputer system, the PROM 108 for designating the address location, and a function of the relation controller 109, with reference to Figure 2.

In the shown embodiment, it is assumed that the address space has 64 Kbytes. In Figure 2, the suffix "H" indicates the hexadecimal notation. The PROM 108 is construced of 14 bits. Two most significant bits of the 14 bits form the field M for designating the function of the port 110, and is used for designating the function of the port 110 as a function designating signal 114. In the shown embodiment, it is assumed that the port 110 is designated as a general input/output port. The PROM 108 includes a field S for designating where the memory 102 is located within the 64 Kbyte space. For this purpose, the field S stores four upper place bits $S_{15}$ to $S_{12}$ of the address which is composed of 16 bits. Therefore, the memory 102 can be located with units of 4 Kbytes within the 64 Kbyte space. The PROM 108 also includes a field P composed of 8 bits, which designate eight upper place bits of an address for the port 110. Therefore, the port 110 can be located with units of 256 bytes.

The relocation controller 109 receives the address outputted from the selector 106 and operates to give allowance or refusal of access to the memory 102 or the port 110 on the basis of the information of the PROM 108.

Since the shown embodiment includes the PROM 108 constructed as mentioned above, the memory 102 can be expanded to 4 Kbytes and the port 110 can be expanded to 256 bits. However, the capacities of the memory and the port can be freely modified by changing the structure of the PROM 108.

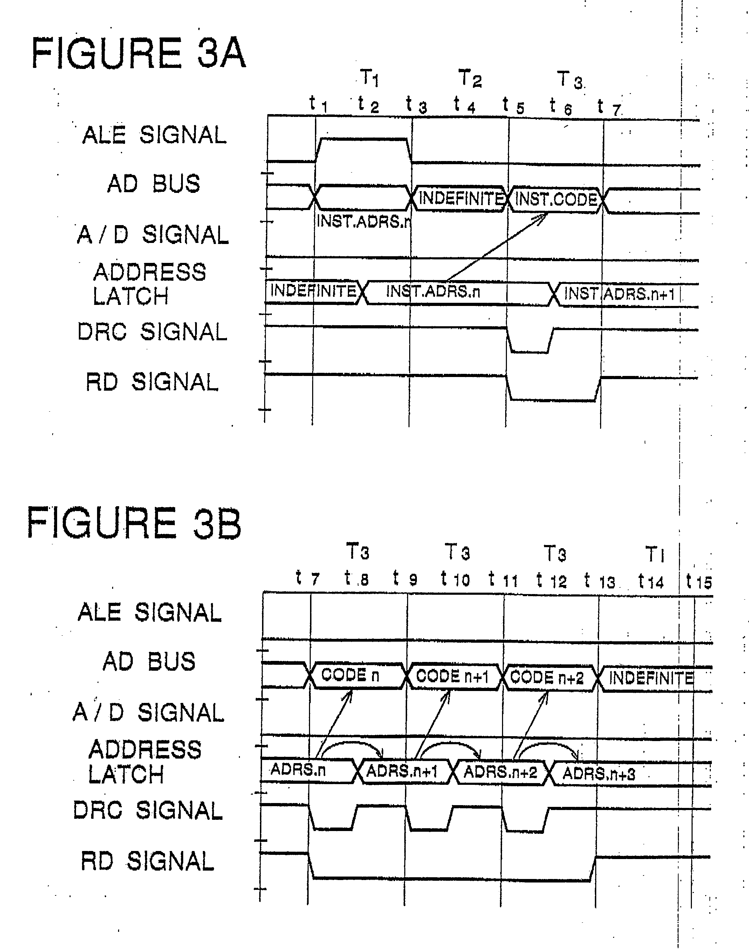

Explanation will be made on the program read cycle of the microprocessor system shown in Figure 1 with reference to Figures 3A and 3B. Figure 3A illustrates a reading cycle for an instruction code after branching in the computer shown in Figure 1 and Figure 3B illustrates a continuous reading cycle for instruction in the computer shown in Figure 1.

The read cycle of the microcomputer 100 is composed of four basic states $T_1$, $T_2$, $T_3$ and $T_I$.

A read cycle of reading a program after a program branch is composed of states $T_1$, $T_2$ and $T_3$ as shown in Figure 3A. The microcomputer 100 outputs an address onto the AD bus 125 in the state $T_1$, and then activates the ALE signal 120. At the same time, the microcomputer 100 brings the A/D signal 123 to a low level which informs the peripheral device that the address is a program address. In response to this, the address is latched by the address latch 103 through the MAD bus 111 at an intermediate timing $t_2$ within the state $T_1$. Since the A/D signal 123 is at the low level, the selector 106 outputs the address received from the address latch 103 at a trailing edge $t_3$ of the state $T_1$. On the other hand, the relocation controller 109 compares the address outputted from the selector 106 with the base address of the memory area stored in the field S of the PROM 108, and allows an access to the memory 102. The microcomputer 100 activates the RD signal 121 in the state $T_3$, so as to read a program from the memory 102. In addition, for preparation of continuous reading, the microcomputer 100 brings the DRC signal 124 to a low level at a leading edge $t_5$ of the state $T_3$ and then brings the same DRC signal 124 to a high signal at an intermediate timing $t_6$ of the state $T_3$ so that the incrementer 105 increments the content of the address latch 103 in synchronism with the DRC signal 124. Thus, the content of the address latch 103 is updated so as to generate an address for a program to be read next.

The program continuous read cycle shown in Figure 3B is composed of the states $T_3$ and $T_I$. The microcomputer 100 brings the RD signal 121 to the low level at the leading edge $t_7$ of the state $T_3$ for reading an instruction code from the memory 102 at an address indicated by the address latch 103. Then, the microcomputer 100 brings the DRC signal 124 to the low level at the leading edge $t_7$ of the state $T_3$ and bring the same signal to the high level at the intermediate timing $t_8$, so that the content of the address latch 103 is updated by the incrementer 105, whereby an address to be read next is generated. The program can be continuously read by repeating the above mentioned program read step. In a final state $T_I$ of the continuous program read cycle, the microcomputer 100 renders the RD signal 121 inactive at a leading edge $t_{13}$ of the same state $T_I$ so that the reading of instruction codes from the memory 102 is terminated.

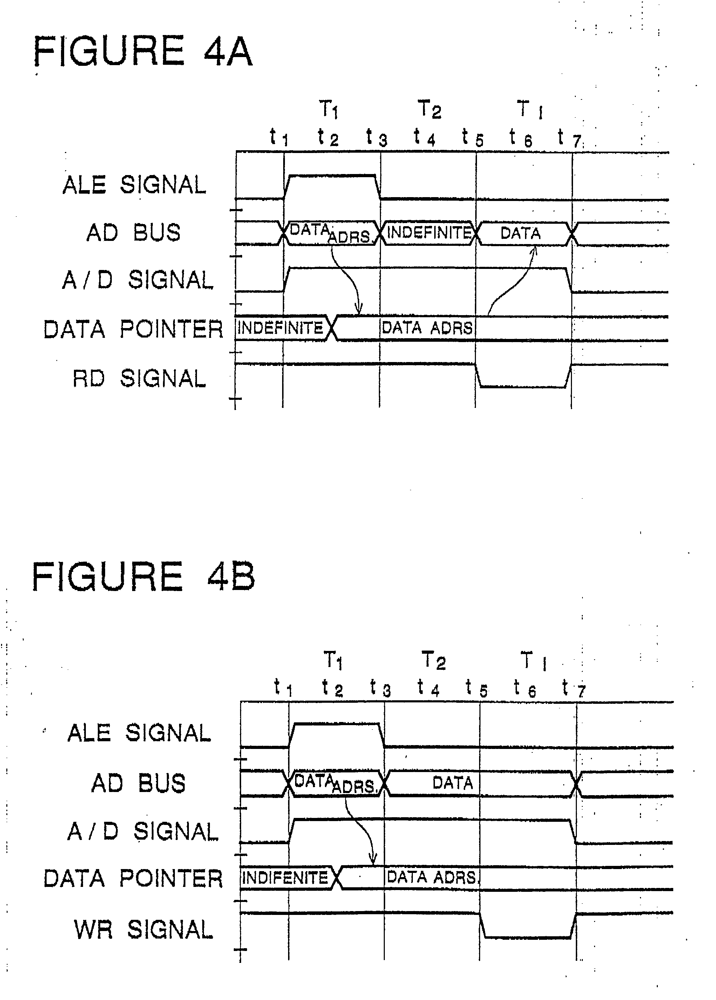

Next, explanation will be made on read and write cycles for data with reference to Figures 4A and 4B. Each of the data read cycle and the data write cycle is composed of the states $T_1$, $T_2$ and $T_I$.

In each of the data read cycle and the data write cycle, the microcomputer 100 outputs an address onto the AD bus 125 in the state $T_1$, and then activates the ALE signal 120 for a period of the state $T_1$. At the same time, the microcomputer 100 brings the A/D signal 123 to a high level which informs the peripheral device that the address is an address for data. In response to this, the address is latched by the data pointer 104 through the MAD bus 111 at an intermediate timing $t_2$ within the state $T_1$, and inputted to the selector 106. Since the A/D signal 123 is at the high level, the selector 106 outputs the address received from the data pointer 104 at a trailing edge $t_3$ of the state $T_I$. In the following steps, a processing similar to corresponding steps of the program reading cycle is performed so that the memory 102 is accessed for data reading or data writing. Namely, the microcomputer 100 activates the RD signal 121 or the WR signal 122 in the state TI, so that date is read from or written into the memory 102.

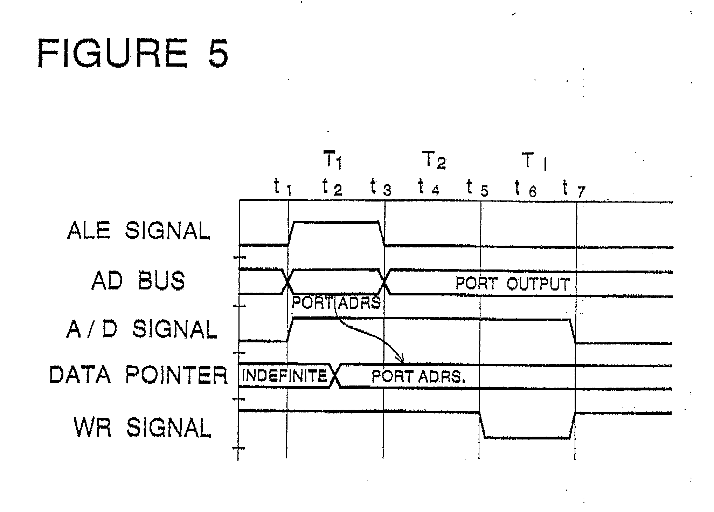

Now, access to the port 100 will be explained with reference to Figure 5. As seen from Figure 5, the access to the port 110 is composed of the states $T_1$, $T_2$ and $T_I$. An operation after the microcomputer 100 outputs an address onto the AD bus 125 and until an address is latched to the data pointer 104 of the peripheral device 101, is completely the same as that for the above mentioned data read cycle and data write cycle.

Since the A/D signal 123 is at the high level, a port address latched in the data pointer 104 is selected by the selector 106. On the other hand, the relocation controller 109 compares the address outputted from the selector with the eight upper place bits $P_{15}$, •••, $P_8$ for the port 110 stored in the field P of the PROM 108, and allows an access to the port 110. In this example, it is assumed that only the port 110 is provided, however, a plurality of ports can be allocated within the space of 256 bytes. Thus, data is written to the port 110 through AD bus 125 and the MAD bus 111 when the WR signal 122 is activated in the state $T_I$.

As explained above, a special bus interface is provided between the microcomputer 100 and the peripheral device which includes the memory 102 and the port 110 assembled on the same chip. With this arrangement, an instruction code fetching can be performed at a high speed, and therefore, it is possible to prevent decrease in performance of the overall microcomputer system, which decrease in performance would otherwise be caused by the instruction code fetching performed by using the conventional bus interface, which has required a relatively long time. In addition, it is possible to easily expand the port.

Next, another embodiment of the microcomputer system in accordance with the present invention will be explained.

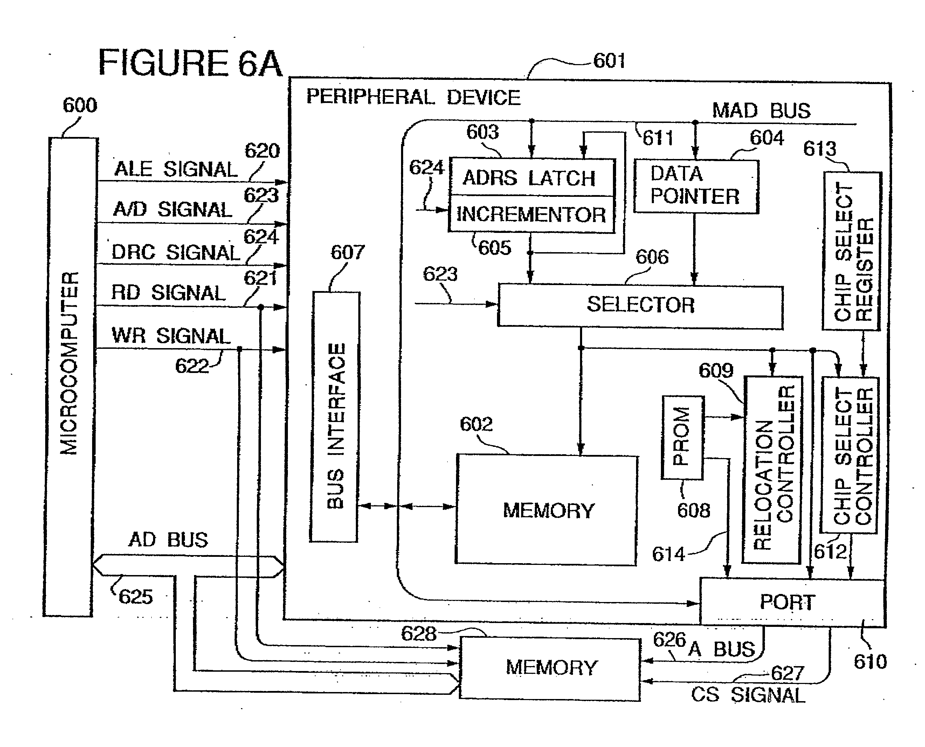

Figure 6A is a block diagram of the second embodiment of the microcomputer system in accordance with the present invention. The shown microcomputer system includes a microcomputer chip 600 for performing a data input/output processing and an arithmetic and logic operation, and for controlling the whole of the microcomputer system, a peripheral device 601 assembled on another chip and a external memory 628. The microcomputer 600, the peripheral device 601 and the external memory 628 are coupled to one another through an address/data bus 625 (called "AD bus" hereinafter), by which an address and data are exchanged between the microcomputer 600, the peripheral device 601 and the external memory 6281.

The microprocessor 600 generates an ALE signal 620 for indicating a timing at which an address is outputted onto the AD bus 625, namely, a timing at which the peripheral device can latch the address on the AD bus 625, a RD signal 621 for providing a timing of reading a program or data, and a WR signal 622 for providing a data wiring timing. The microcomputer 600 also generates an A/D signal 623 for indicating which a given address is, a program address or a data address, and a DRC signal 624 for defining a timing at which a content of an address latch mentioned hereinafter is updated. The above mentioned signals 620, 621, 622, 623 and 624 are supplied to the peripheral device 601, and the RS signal 621 and the WR signal 622 of the above mentioned signals are supplied to the external memory 628.

The peripheral device 601 includes a memory 602 for storing programs and data, an address latch 603 for latching the address for the program when the ALE signal 620 is active, a data pointer 604 for latching the address for the data when the ALE signal 620 is active, an incrementer 605 for updating a content of the address latch 603, a selector 606 coupled to receive an output of the address latch 603 and an output of the data pointer 604 and for selecting one of the received outputs in accordance with the A/D signal 123. The peripheral device 601 also includes a bus interface 607 for controlling an interface between the microcomputer 600 and the peripheral device 601, a general input/output port 610, a PROM 608 for storing information about where a base address for each of the input/output port 610 and the memory 602 is located in an address space, and for storing information designating a function of the port 610, and a relocation controller 609 operating on the basis of the information stored in the PROM 608 for managing the address for the memory 602 and the port 610. In the second embodiment, furthermore, the peripheral device 601 includes a chip select controller 612 and a chip select register 613. The above mentioned elements included in the peripheral device 601 are coupled to a memory address/data bus (MAD) 611.

A construction of the PROM 608 is completely the same as that shown in Figure 2. Namely, a field M composed of two upper place bits designates the function of the port 610. Therefore, the function of the port 610 is designated in the form of a function designation signal 614. In this embodiment, the port 610 is given a first function designated as a terminal for outputting a chip select signal (called "CS signal" hereinafter) 627 and a second function designated as a port for outputting an address to an external. Specifically, the port 610 is of a 16-bit port. Four upper place bits of the 16 bits used as the terminal outputting the CS signal 627. 12 lower place bits of the 16 bits are used as a port for outputting 12 lower place bits of the address which is composed of 16 bits. The chip select register 613 is composed of four 4-bit registers, each of which stores four upper place bits of the 16-bit address. The chit select controller 612 compares four upper place bits of the address outputted from the selector 606 with each of the contents of the chip select register 613, and outputs the CS signal corresponding to one of the four registers of the chip select register, to four upper place bits of the port 610. Thus, four CS signal can be outputted at maximum in space units of 4 Kbytes.

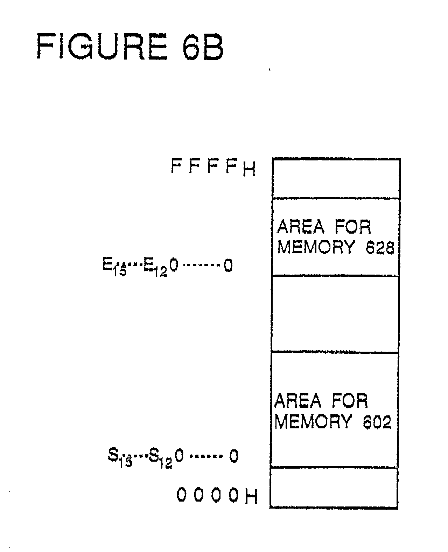

Figure 6B illustrates one example of the memory space. The space of the memory 602 in the peripheral device 601 is designated by the field S of the PROM 608, similarly to the first embodiment. On the other hand, the space of the external memory 628 is designated by storing information of four bits $E_{15}, \cdots, E_{12}$ to the chip select register 628.

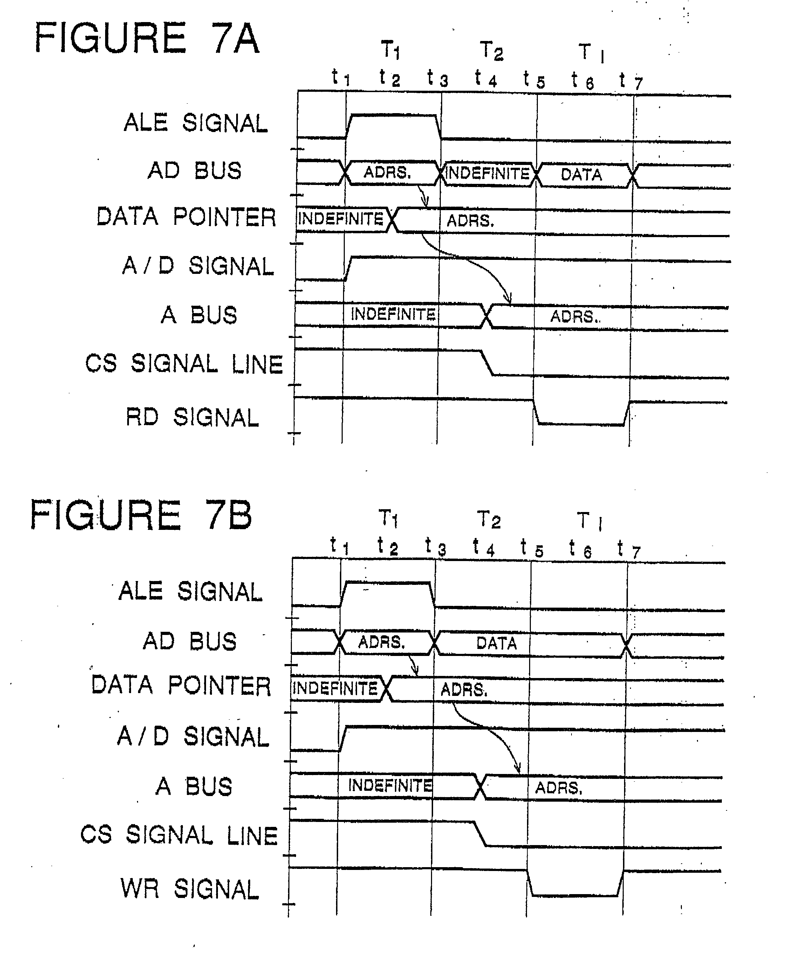

Now, explanation will be made with reference to Figures 7A and 7B on an operation when the microcomputer 600 in the microcomputer system shown in Figure 6A accesses data stored in the memory 628. Figure 7A illustrates a cycle for reading data from the memory 628.

The microcomputer 600 outputs an address through the AD bus 625 to the peripheral device 601 in the state $T_1$, and then activates the ALE signal 120 so that the address is latched by the data pointer 604. At the same time, the microcomputer 100 brings the A/D signal 623 to a high level. Therefore, the address latched in the data pointer 604 is inputted through the selector 606 to the chip select controller 612. The chip select controller 612 compares four upper place bits $E_{15}, \cdots, E_{12}$ of the received address with the contents of the chip select register 613. If coincidence is obtained, the chip select controller 612 outputs the CS signal to any one bit of the four upper place bits of the port 610. On the other hand, the 12 lower place bits of the address are outputted without any modification to the 12 lower place bits of the port 610. As a result, at an intermediate timing $t_4$ of the state $T_2$, the CS signal is outputted as the CS signal 627 from the port 610 to the memory 628 and the address is outputted through an address bus (A bus) 626 to the memory 628. Thereafter, the RD signal 621 is activated in the state $T_i$, so that data stored in the memory 628 is read and supplied to the microcomputer 600 through the AD bus 625.

Figure 7B illustrates a cycle for writing data to the memory 628. An operation in the data write cycle is the same as the of the above mentioned data read cycle, excepting that data is written to the memory

5

628.

In addition, the operation for reading programs from the internal memory 602 and the operation for data reading and data writing to the internal memory 602 are performed similarly to the first embodiment.

As described above, when another external memory is accessed, the peripheral device 601 functions as an address latch and a CS signal supplying supplying means. Therefore, an ordinary memory can coupled to the peripheral device without externally providing an address decoder, and an address latch for an address/data multiplexing bus interface.

As seen from the above, paying attention to the fact that a program has a certain expectable sequence in address of instruction codes located in the memory, the microcomputer system in accordance with the present invention provides internally an address latch and a means for updating an address latch without being supplied with an address, so that in an instruction code fetch cycle, instruction codes can be read out of an internal memory at a high speed without supplying an address from a microcomputer. In the conventional microcomputer system, the operation for fetching the instruction codes has been very lower than the internal processing of the microcomputer, and as a result, the operation speed of the overall microcomputer system has been very low. This drawback will be overcome by the present invention, and therefore, the processing performance of the microcomputer system can be exerted to a maximum extent.

In addition, in the conventional microcomputer system, since the chip size and the number of terminals of the microcomputer are limited, the port must be expanded by a means exclusively used for the port expansion. In the present invention, on the other hand, such a function is incorporated within a peripheral device so that the peripheral device can function as a port expander.

Furthermore, in accordance with the present invention there is provided a means for designating the designation of the port so that the port can be used not only as an ordinary input/output but also a line for outputting the CS signal and a line for outputting an address. As a result, there can be omitted an additional circuit such as an address decoder and an address latch for an address/data multiplexing bus interface which must have been externally provided in the conventional microcomputer system. Therefore, the overall microcomputer system can be simplified, and made inexpensive with a high reliability.

The invention has thus been shown and described with reference to the specific embodiments. However, it should be noted that the present invention is in no way limited to the details of the illustrated structures but changes and modifications may be made within the scope of the appended claims.

**Claims**

1. A microcomputer system comprising first processing means assembled on a first substrate and including at least instruction execution means, and second processing means assembled on a second substrate which is discrete from the first substrate, the first and second processing means being coupled to each other through a bus, the second processing means including memory means for storing a program to be executed by the instruction execution means, input/output means for performing an input and output of data between the microcomputer system and a device external to the microcomputer system, and control means for controlling a transfer of the data and the program between the first and second processing means, the control means including means for indicating an address for the memory means, means for updating a content of the address indicating means, and means for transferring the program and the data between the first and second processing means, the instruction execution means operating to output an address for the input/output means so that the data can be transferred between the first processing means and the input/output means through the transfer means, the instruction execution means operating to output an update control signal to the updating means so as to cause the content of the indicating means to be updated without supplying an address for the memory means so that the program can continuously be transferred from the memory means to the first processing means through the transfer means.

2. A microcomputer system claimed in Claim 1 further including means for designating a function of the input/output means so that one of a plurality of functions can be designated for the input/output means by previously designating the plurality of functions to the function designating means.

3. A microcomputer system claimed in Claim 1 wherein the address indicating means is composed of an address latch and the means for updating the content of the address indicating means includes an incrementer which receives the output of the address latch for incrementing the received address after each program reading.

4. A data processing circuit which can be coupled through a bus to a microcomputer assembled on a substrate discrete from a substrate of the data processing circuit, comprising memory means for storing a program to be executed by the microcomputer, input/output means for performing an input and output of data between the microcomputer system and a device external to the microcomputer system, and control means for controlling a transfer of the data and the program between the microcomputer and the data processing circuit, the control means including means for indicating an address for the memory means, means for updating a content of the address indicating means, and means for transferring the program and the data between the microcomputer and the data processing circuit, so that when an instruction code should be continuously read from the memory means, the updating means is caused to update the content of the indicating means without being supplied with an address for the memory means so that the program can continuously be transferred from the memory means.

5. A circuit claimed in Claim 4 further including means for designating a function of the input/output means so that one of a plurality of functions can be designated for the input/output means by previously designating the plurality of functions to the function designating means.

# FIGURE 1

EP 0 328 422 A2

# FIGURE 2

FFFFH

$P_{15} \cdots\cdots P_8$  $\quad 1 \cdots\cdots 1$

$P_{15} \cdots\cdots P_8$  $\quad 0 \cdots\cdots 0$

PORT AREA

MEMORY AREA

$S_{15} \cdots\cdots S_{12}$  $\quad 0 \cdots\cdots 0$

$0\ 0\ 0\ 0\ H$

PROM 108
(14BIT)

| M | S | P |
|---|---|---|

$\underbrace{\qquad S_{15;} \cdots\cdots {,} S_{12} \qquad}$  $\underbrace{\qquad P_{15;} \cdots\cdots {,} P_8 \qquad}$

| M | FUNCTION |
|----|----------|
| 00 | DESIGNATING I / O PORT |
| 01 | DESIGNATING CS SIGNAL OUTPUT TERMINAL AND ADDRESS OUTPUT TERMINAL |

EP 0 328 422 A2

# FIGURE 3A

# FIGURE 3B

# FIGURE 4A

# FIGURE 4B

# FIGURE 5

# FIGURE 6A

EP 0 328 422 A2

# FIGURE 6B

FFFF$_H$

$E_{15} \cdots E_{12} 0 \cdots\cdots 0$

AREA FOR
MEMORY 628

AREA FOR
MEMORY 602

$S_{15} \cdots S_{12} 0 \cdots\cdots 0$

0000H

# FIGURE 7A

# FIGURE 7B